# EUROPEAN PATENT SPECIFICATION

(11) **EP 3 019 449 B1**
(45) Date of publication and mention of the grant of the patent: **19.01.2022**
(21) Application number: 14739721.0
(22) Date of filing: 04.07.2014
(51) Int. Cl.: C02F 1/44, C05F 3/00, C05B 7/00, C02F 1/42

(54) **NUTRIENT RECOVERY**
NÄHRSTOFFRÜCKGEWINNUNG
RÉCUPÉRATION DE NUTRIMENTS

(30) Priority: 10.07.2013 SE 1350862
(43) Date of publication of application: 18.05.2016
(73) Proprietor: Again Nutrient Recovery AB, 414 58 Göteborg (SE)
(72) Inventor: GANROT, Zsofia, S-414 58 Göteborg (SE); BYDÉN, Stefan, S-414 58 Göteborg (SE)
(74) Representative: AWA Sweden AB
(86) International application number: PCT/EP2014/064361
(87) International publication number: WO 2015/004031

(56) References cited:
- WO-A1-94/08896
- WO-A1-99/51522
- DE-A1-102004 023 865
- US-B1- 6 409 788
- MIJANGOS F ET AL: "Synthesis of struvite by ion exchange isothermal supersaturation technique", REACTIVE & FUNCTIONAL POLYMERS, ELSEVIER SCIENCE PUBLISHERS BV, NL, vol. 60, 1 July 2004 (2004-07-01), pages 151-161, XP004518373, ISSN: 1381-5148, DOI: 10.1016/J.REACTFUNCTPOLYM.2004.02.019

## Description

### FIELD OF THE INVENTION

The present invention relates to a method for recovering nutrients from hydrolysed urine. The present invention further relates to the use of a cation exchanger for recovering nutrients from hydrolysed urine.

### BACKGROUND OF THE INVENTION

Today there is a high awareness of the importance of maintaining sustainable nutrient cycles and of decreasing some of the negative impact that humans have on the environment. In order to maintain the nutrient cycles, recycling or reusing waste produced by humans is a key part. Waste water originating from toilets, so called black water comprising e.g. urine and faeces, on the one hand needs to be purified from chemicals such as pharmaceuticals and/or heavy metals before it can be released into the nature; and on the other hand comprises a large amount of useful nutrients suitable for reuse. It has been suggested that these nutrients may be recovered and reused in for example agriculture fertilizers. Urine in particular comprises substances, such as nitrogen and phosphorus, which may form important constituents in fertilizers.

WO 99/51522 discloses a method for the recovery of nutrients from human urine substantially free of excrements and other debris. The method comprises the consecutive steps of a) concentrating the urine, b) initiating struvite crystallisation in the concentrated urine by adding MgO and c) separating struvite crystals from the solution. The method may further comprise a step d) of recovering nitrogen from the solution obtained in step c) by ammonia adsorption, preferably by the use of wollastonite or clinoptilolite. The struvite and the ammonium containing adsorbent are suitable for use as fertilizers.

CN 101376531 discloses a MAP (i.e. magnesium ammonium phosphate) precipitation filler and a method for preparing a MAP precipitation filler. A fluidisation step is performed in order to form a crystalline MAP film on the filler, which may be a porous carrier such as a zeolite. Thereafter the filler with the crystalline MAP film on its surface is placed in waste water containing ammonia and phosphor. In the waste water further MAP is crystallized on the surface of the filler.

Mijangos et al.: "Synthesis of struvite by ion exchange isothermal supersaturation technique", Reactive and Functional Polymers, vol. 60, 2004-07-01, p. 151-161 discloses a method for obtaining stable supersaturated struvite solutions by stripping magnesium from Lewatite CNP80 cation exchange resin in Mg-form by using ammonium phosphate and dihydrophosphate solutions under batch and dynamic conditions.US 6 409 788 discloses a method for producing organic-based, slow release fertilizers by processing organic-based and industrial wastes. The method comprises introducing an organic waste into a reactor clarifier and precipitate settleable and nonsettleable material from the organic waste by mixing with substances that include a flocculant, a phosphate precipitating agent, a base and optionally an ammonia retaining agent to produce a precipitate and a liquid; separating the precipitate from the liquid; and drying the precipitate.

There is however still a need in the art for improved and simplified methods which allow for efficient recovery of nutrients from waste water such as black water.

### SUMMARY OF THE INVENTION

Objects of the present invention are to provide improved and simplified methods which allow for efficient recovery of nutrients from waste water such as black water. A further object is the use of a porous carrier such as a cation exchanger for efficient recovery of nutrients from black water.

These objects are achieved, in a first aspect, by means of a method for recovering nutrients from hydrolysed urine, comprising the steps of:
a) adding a cation exchanger comprising sorbed magnesium to the hydrolysed urine;
b) mixing the cation exchanger with the hydrolysed urine, and
c) adjusting the pH of the mixture to a pH of above 9;
   such as to release at least a part of the sorbed magnesium from the cation exchanger to the urine solution of the mixture, precipitate phosphorus in the urine solution, and sorb at least part of the ammonium to the cation exchanger,
   thereby providing a nutrient sludge comprising precipitated phosphorus and a cation exchanger comprising sorbed ammonium;
d) filtering the nutrient sludge, and optionally
e) drying the resulting filtrate to provide a fertilizer comprising cation exchanger, ammonium and phosphorus,
wherein the cation exchanger is selected from the group consisting of zeolite; peat; processed coconut shell, and combinations thereof, the combinations preferably being selected from zeolite and peat; zeolite and processed coconut shell; zeolite, peat and processed coconut shell, and peat and processed coconut shell.

The inventive method thus provides a simplified process, comprising fewer steps that need to be performed as compared to prior art methods. In the method according to the invention only one composition, namely the cation exchanger comprising sorbed magnesium, is added to the hydrolysed urine. The cation exchanger comprising magnesium readily releases at least a part of the (pre)sorbed magnesium to the hydrolysed urine solution upon contact and mixing with the solution. The cation exchanger comprised in the resulting mixture thereafter sorbs at least a part of the ammonium contained in the hydrolysed urine part of the mixture. The magnesium released into the hydrolysed urine or mixture triggers precipitation of phosphorus in the urine solution. Thus, nearly all phosphorus is precipitated in the solution.

The inventors have surprisingly found that the precipitate comprised in the nutrient sludge achieved according to the method of the present invention comprises a mixture of several different compounds. A precipitate comprising several different compounds thus enables recovery of a wider range of different nutrients as well as larger individual amounts of each of these nutrients. Hence, the method according to the present invention is not mainly concerned with recovery of a pure precipitate, i.e. a precipitate which only contains one compound (such as crystalline struvite), but rather with recovery of a variety of different nutrients or compounds.

The adjustment of pH of the hydrolysed urine solution or mixture may accelerate nutrient recovery by precipitation and adsorption, since for example the conditions for precipitation within the hydrolysed urine solution are promoted. Adjusting pH of the hydrolysed urine solution in this way may furthermore optimise the reaction conditions within the hydrolysed urine solution. In one specific embodiment, step c) of the method for recovering nutrients from hydrolysed urine comprises: adjusting the pH of the mixture to a pH of above 10.

In an embodiment, the cation exchanger is zeolite and peat. In an embodiment, the cation exchanger is zeolite and processed coconut shell. In an embodiment, the cation exchanger is zeolite, peat and processed coconut shell. In an embodiment, the cation exchanger is peat and processed coconut shell. In an embodiment, the cation exchanger is zeolite. In an embodiment, the cation exchanger is peat. In an embodiment, the cation exchanger is processed coconut shell.

The ion exchange of the cation exchanger's sorbed magnesium ion(s) occurs readily upon contact with the ammonium ion(s) in the hydrolysed urine solution. At least a part of the sorbed magnesium is released to the hydrolysed urine solution. This provides free magnesium ions in the hydrolysed urine solution or mixture which in turn triggers precipitation of phosphorus in the hydrolysed urine solution or liquid part of the mixture. A large amount of phosphorus is thus regained.

In previous prior art methods, only the pure form of phosphorus precipitate, i.e. struvite crystals, is typically recovered. The present method differs from such prior art methods in that it is rather concerned with recovery of a mix of different precipitated compounds or nutrients. A further advantage of the method is that a large amount of ammonium can be recovered. Ammonium may not only be recovered in the precipitate, e.g. in the form of struvite and/or dittmarite, but also within the cation exchanger, such as within the zeolite, and/or on the cation exchanger, such as on the peat and/or on the processed coconut shell itself. In this way, overall large amounts of ammonium may be recovered.

The reactions taking place while conducting the steps of the inventive method may be optimized concurrently. This means that it is possible to simultaneously recover at least as much phosphorus and ammonium in the method according to the present invention as would be possible if ammonium and phosphorus were to be recovered in separate subsequent steps.

In an embodiment of the present invention, steps a), b) and c) are performed in the same reaction vessel. In this way, the process may be further simplified.

In an embodiment, step a) further initially comprises washing the cation exchanger with a magnesium solution in order to sorb magnesium to the cation exchanger. In this way, the cation exchanger becomes preloaded with magnesium. A pre-loaded cation exchanger should thus be understood as a cation exchanger comprising magnesium. In one example of this embodiment, the magnesium solution used for washing/pre-loading is MgSO₄. In such an example, magnesium sulphate (MgSO₄) wash may further result in the cation exchanger being pre-loaded with sulphur. In this case, sulphur is sorbed to the cation exchanger through adsorption to the surfaces of the cation exchanger. This may in turn enable production of a sulphur containing nutrient.

In an embodiment, the method further comprises an initial step of hydrolysing urea comprised in a urine solution to ammonium, thereby providing hydrolysed urine. It is advantageous to provide hydrolysed urine to step a) of the method, since the ammonification process, in which urea naturally hydrolyses to ammonium, in itself is a slow process. Pre-hydrolysis thus enables faster nutrient recovery in steps a)-c). In one example of this embodiment, the method further comprises an initial step of removing nearly all faeces from a black water solution comprising urine and faeces, thereby providing a urine solution. The skilled person understands that this may be achieved in e.g. a commercial separator.

Steps d) and e) according to the present invention accomplish a fertilizer comprising nutrients, such as at least ammonium and phosphorus, which is ready for use. In some instances, step d) may moreover be preceded by an initial step of sedimenting the nutrient sludge, making it possible for an easier and faster filtering step.

In an embodiment, the amount of (elemental) phosphorus being recovered from the hydrolysed urine is at least 90 % by weight, such as at least 95 % by weight, such as in the range of from 95 to 99 % by weight, or such as in the range of from 98 to 99 % by weight.

In an embodiment, the amount of ammonium being recovered from the hydrolysed urine is at least 50 % by weight, such as in the range of from 50 to 95 % by weight, such as in the range of from 60 to 95 % by weight, or such as in the range of from 70 to 95 % by weight.

The amounts in percentage by weight of as mentioned above refer to the amount recovered in relation to the total amount of (elemental) phosphorus and ammonium present in the hydrolysed urine solution prior to addition of the cation exchanger comprising sorbed magnesium.

In an embodiment, the pH adjustment of step c) comprises adding a pH regulating agent. In an alternative embodiment, the pH adjustment of step c) is optional. Hence, in such an alternative embodiment, the method for recovering nutrients from hydrolysed urine, comprises the steps of:
a) adding a cation exchanger comprising sorbed magnesium to the hydrolysed urine, and;
b) mixing the cation exchanger with the hydrolysed urine;
   such as to release at least a part of the sorbed magnesium from the cation exchanger to the urine solution of the mixture, precipitate phosphorus in the urine solution, and sorb at least part of the ammonium to the cation exchanger,
   thereby providing a nutrient sludge comprising precipitated phosphorus and cation exchanger comprising sorbed ammonium,
d) filtering the nutrient sludge, and optionally
e) drying the resulting filtrate to provide a fertilizer comprising cation exchanger, ammonium and phosphorus,
   wherein the cation exchanger is selected from the group consisting of zeolite; peat; processed coconut shell, and combinations thereof, the combinations preferably being selected from zeolite and peat; zeolite and processed coconut shell; zeolite, peat and processed coconut shell, and peat and processed coconut shell.

In an embodiment, the pH adjustment is conducted by adding a cation exchanger further comprising a pH regulating agent. An advantage of such a cation exchanger composition comprising a pH regulating agent may be further simplification of the method. Such a pH regulating agent may thus accomplish an increase of the pH of the hydrolysed urine solution to a pH of above 9, and preferably of above 10. In an embodiment, the pH regulating agent is NaOH. In an embodiment, the pH regulating agent is MgO. In an example, the MgO is in the form of a slurry, preferably an aqueous slurry.

In an embodiment, step a) comprises adding zeolite comprising sorbed magnesium to the hydrolysed urine. In a specific embodiment, zeolite comprising sorbed magnesium is mixed with natural peat, i.e. peat not comprising any (substantial amount of) magnesium. This may furthermore be advantageous since a lower amount of pH adjusting agent might be required (compared to an embodiment wherein peat comprising sorbed magnesium is used) due to the peat's buffering capacity. The ratio of zeolite comprising magnesium to natural peat may be in the range of from 50 % to 75 % dry weight of zeolite comprising magnesium to 25 % to 50 % dry weight of natural peat.

In an embodiment, step a) comprises adding peat comprising sorbed magnesium to the hydrolysed urine. In a specific embodiment, peat comprising sorbed magnesium is mixed with a natural zeolite, i.e. a zeolite not comprising any (substantial amount of) magnesium. In some instances, a method comprising only pre-loading of peat with magnesium may be fast, easy and energy efficient, e.g. as accounted for in any one of Examples I to VII. More specifically, it may be advantageous to add the pH regulating agent, such as NaOH and/or MgO, while pre-loading the peat with magnesium. In particular, the pH regulating agent may be added to wet peat comprising magnesium prior to air-drying. The addition of NaOH to the composition may be achieved by spraying a NaOH-solution onto the composition of wet peat comprising magnesium, or by mixing NaOH granules into the composition of wet peat comprising magnesium . Thereby, a pH adjusted Mg-loaded peat composition (thus further comprising NaOH) may be obtained. Thus, the inventive method may therewith be further simplified, since step c) of adjusting the pH may be performed simultaneously with step a) of adding the peat comprising magnesium to the hydrolysed urine. Another advantage of using peat in the inventive method is that the optional filtering and drying processes for pre-loading peat with magnesium may become even easier and more energy efficient than for e.g. the process of pre-loading and drying zeolite with Mg.

In an embodiment, the ratio of peat comprising magnesium to natural zeolite is in the range of from 1 % to 50 % dry weight of peat comprising magnesium to 50 % to 99 % dry weight of natural zeolite. In an embodiment, the ratio of peat comprising magnesium to natural zeolite is in the range of from 2 % to 50 % dry weight of peat comprising magnesium to 50 % to 98 % dry weight of natural zeolite. In an embodiment, the ratio of peat comprising magnesium to natural zeolite is in the range of from 4 % to 50 % dry weight of peat comprising magnesium to 50 % to 96 % dry weight of natural zeolite. In an embodiment, the ratio of peat comprising magnesium to natural zeolite is in the range of from 10 % to 50 % dry weight of peat comprising magnesium to 50 % to 90 % dry weight of natural zeolite. In an embodiment, the ratio of peat comprising magnesium to natural zeolite is in the range of from 24 % to 50 % dry weight of peat comprising magnesium to 50 % to 76 % dry weight of natural zeolite. In an embodiment, the ratio of peat comprising magnesium to natural zeolite is in the range of from 30 % to 50 % dry weight of peat comprising magnesium to 50 % to 70 % dry weight of natural zeolite.

In an embodiment, step a) comprises adding processed coconut shell comprising sorbed magnesium to the hydrolysed urine. In a specific embodiment, processed coconut shell comprising sorbed magnesium is mixed with a natural zeolite, i.e. a zeolite not comprising any (substantial amount of) magnesium. In some instances, a method involving pre-loading of processed coconut shell with magnesium solely may be fast, easy and energy efficient.

In an embodiment, step a) comprises adding a mixture of zeolite and peat comprising sorbed magnesium to the hydrolysed urine. In a specific embodiment, the ratio of zeolite and peat comprising sorbed magnesium, may be 25 % to 50 % dry weight of peat comprising magnesium and 50 to 75 % dry weight of zeolite comprising sorbed magnesium, such as 25 % dry weight of peat comprising magnesium and 75 % dry weight of zeolite comprising sorbed magnesium, or such as 50 % dry weight of peat comprising magnesium and 50 % dry weight of zeolite comprising sorbed magnesium.

In an embodiment, the peat is sieved peat, optionally the peat is sieved prior to washing with a magnesium solution.

In an embodiment, the peat is non-sieved peat.

In an embodiment, steps a) to c) are conducted at a temperature in the range of from 0 to 65 °C, such as in the range of from 5 to 50 °C, or for example in the range of from 10 to 35 °C.

There is provided a fertilizer obtainable by the method according to the present invention. The previously stated advantages of the method also apply to the fertilizer obtainable by this method. Such a fertilizer may be obtained according to specific embodiments and examples as disclosed in the method aspect.

The objects of the invention are moreover achieved, in a further aspect, by the use of a cation exchanger comprising sorbed magnesium for recovering at least one nutrient from hydrolysed urine, wherein the nutrient(s) is/are recovered at a pH of above 9, and wherein the cation exchanger is selected from the group consisting of zeolite; peat; processed coconut shell, and combinations thereof, said combinations preferably being selected from zeolite and peat; zeolite and processed coconut shell; zeolite, peat and processed coconut shell, and peat and processed coconut shell.

In an embodiment of the use aspect, the nutrients are recovered at a pH of above 10.

In an embodiment of the use aspect, the at least one nutrient is phosphorus. In such instances, the amount phosphorus recovered from the hydrolysed urine is at least 90 % by weight, such as at least 95 % by weight, such as in the range of from 95 to 99 % by weight, or such as in the range of from 98 to 99 % by weight.

In an embodiment of the use aspect, a further recovered nutrient is ammonium. In such instances, the amount of ammonium recovered from the hydrolysed urine is at least 50 % by weight, such as in the range of from 50 to 95 % by weight, such as in the range of from 60 to 95 % by weight or such as in the range of from 70 to 95 % by weight.

In an embodiment of the use aspect, said cation exchanger is peat comprising sorbed magnesium.

In an embodiment of the use aspect, said peat comprising sorbed magnesium is mixed with a natural zeolite.

In an embodiment of the use aspect, the ratio of peat comprising sorbed magnesium to natural zeolite is in the range of from 1 % to 50 % dry weight of peat comprising magnesium to 50 % to 99 % dry weight of natural zeolite. In an embodiment of the use aspect, the ratio of peat comprising magnesium to natural zeolite is in the range of from 2 % to 50 % dry weight of peat comprising magnesium to 50 % to 98 % dry weight of natural zeolite. In an embodiment of the use aspect, the ratio of peat comprising magnesium to natural zeolite is in the range of from 4 % to 50 % dry weight of peat comprising magnesium to 50 % to 96 % dry weight of natural zeolite. In an embodiment of the use aspect, the ratio of peat comprising magnesium to natural zeolite is in the range of from 10 % to 50 % dry weight of peat comprising magnesium to 50 % to 90 % dry weight of natural zeolite. In an embodiment of the use aspect, the ratio of peat comprising magnesium to natural zeolite is in the range of from 24 % to 50 % dry weight of peat comprising magnesium to 50 % to 76 % dry weight of natural zeolite. In an embodiment of the use aspect, the ratio of peat comprising magnesium to natural zeolite is in the range of from 30 % to 50 % dry weight of peat comprising magnesium to 50 % to 70 % dry weight of natural zeolite.

In an embodiment of the use aspect, the nutrients recovered are selected from the group consisting of struvite, K-struvite, dittmarite, brushite, newberyite, montgomeryite, calcium phosphate, nesquehonite, magnesium hydroxide, calcium hydroxide, magnesium carbonate, calcium carbonate, dolomite, magnesium sulphate, calcium sulphate, epsomite, brucite and potassium sulphate.

### BRIEF DESCRIPTION OF THE DRAWINGS

Referring now to the Figures, which are exemplary embodiments, wherein:
FIG. 1 is a flow chart depicting one example of a method for recovering nutrients from hydrolysed urine according to the present invention;
FIG. 2 is a schematic representation depicting one example of a system, for carrying out the inventive method, for recovering nutrients from hydrolysed urine.

### DETAILED DESCRIPTION

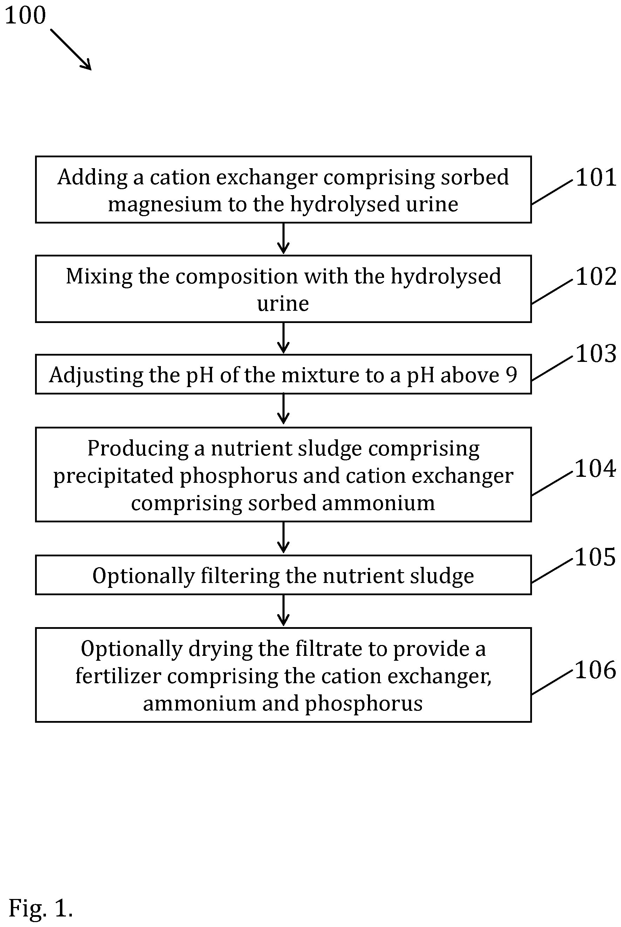

In order to maintain sustainable nutrient cycles, it may be important to recover nutrients from waste water, e.g. urine, for reuse in e.g. fertilizers. A method for achieving this is shown in Figure 1.

Figure 1 is a flow chart of a method 100 for recovering nutrients from hydrolysed urine according to one embodiment of the present invention. In a first step 101, a cation exchanger comprising sorbed magnesium is added to the hydrolysed urine. Thereafter the composition of the cation exchanger comprising sorbed magnesium is, in a further step 102, mixed with the hydrolysed urine. Addition 101 and mixing 102 may for example be carried out concurrently or as separate consecutive steps. Step 102 is followed by step 103 of adjusting the pH of the mixture to a pH of above 9. Step 103 of adjusting pH may be performed at the same time as step 101 and/or step 102, or in a separate subsequent step. A nutrient sludge comprising precipitated phosphorus and the cation exchanger comprising sorbed ammonium is thus produced, as depicted by 104. Thereafter a step 105 is performed in which the nutrient sludge is filtered. The filtrate resulting from optional step 104 can thereafter, in a further optional step 106, be dried to provide a dried fertilizer composition comprising the cation exchanger, ammonium and phosphorus.

The step 103 of adjusting the pH of the mixture to a pH of above 9 may be optional.

The term "sorption", should herein be understood as a process of sorbing and as a state of being sorbed. Sorption is herein intended to include one or more of absorption, adsorption and/or ion exchange. Absorption is a process in which a first substance (atoms, molecules, ions) can enter and be enclosed in a bulk phase or volume (gas, liquid or solid) of a second substance. Adsorption is a condition in which atoms, ions, or molecules from a gas, liquid or dissolved solid, adhere or bond to an adsorbent's surface. Ion exchange is the passing of ions between an electrolyte and another electrolyte or between a substance and an electrolyte, such as between a composition and a solution, during which ions can be interchanged.

The term "cation exchanger", should herein be understood as a compound or resin which can ion exchange its sorbed cation with a cation comprised in a solution, i.e. upon addition of the cation exchanger to the solution, the cation exchanger can exchange its sorbed cation with the cation comprised in the solution.

The term "zeolite", should herein be understood as a crystalline solid structure, made of e.g. silicon, aluminium and oxygen. The zeolite is porous and comprises a framework of cavities and channels. The zeolite's porous structure enables accommodation of cations, such as e.g. sodium, magnesium, within its cavities and channels. A cation bound within the zeolite can be ion exchanged with a free cation, for example upon contact with a solution comprising the free cation. The ion exchange normally occurs within the zeolite.

Different types of zeolites, such as natural zeolites and synthetic zeolites, may be used in the present invention. Examples of natural zeolites are clinoptilolite, chabazite, heulandite, natrolite, phillipsite, stilbite and analcime. Examples of synthetic zeolites are zeolite NaA, zeolite NaX, zeolite NaY, zeolite NaP, zeolite NaP1, ZSM-5, cancrinite and hydroxisodalite.

Ammonium is, in step 102, normally sorbed to the zeolite by ion exchanging. The primary ion exchange occurs within the zeolite's cavities and channels by ion exchanging bound magnesium with the free ammonium.

It is hypothesized that phosphorus present in the hydrolysed urine solution or in the mixture cannot enter the cavities or channels of the zeolite, since the phosphorus component of the phosphate is too big. Phosphorus might therefore be prevented from precipitating (with)in the zeolite. Precipitation may therefore not occur within or on the zeolite, since the required magnesium either is out of reach (i.e. within the zeolite) or the required magnesium is present in the solution.

The term "peat", should herein be understood as an accumulation of partially decayed vegetation. Peat commonly comprises sphagnum. Two examples of peat are described in Example I to VII.

Ammonium is, in step 102, normally sorbed to the peat by adsorption. The adsorption of ammonium occurs onto the surface of the peat, since peat has a negatively charged surface, which is attractive to cations, such as magnesium ions and ammonium ions. At an elevated pH, such as pH of above 9, or such as pH of above 10, peat readily releases nearly all of its magnesium to the hydrolysed urine solution or mixture. Hence the precipitation of phosphorus occurs in the solution rather than on the peat.

The term "processed coconut shell", should herein be understood as a piece of (natural) coconut shell which has been processed or treated, such as to divide it into smaller parts, for example by chopping, crushing or grinding, preferably by grinding.

It is commonly known that the shell of a coconut functions as a cation exchanger. Hence, a skilled person would understand that processed coconut shell would, in the inventive method, function in a similar way as peat, since display similar and comparable characteristics in their function as cation exchangers. Moreover, the processed coconut shell may, in the inventive method, be used in a similar fashion as peat, in terms of e.g. added amounts of the processed coconut shell comprising sorbed magnesium to the hydrolysed urine, and mixed ratios with any of the other cation exchangers described herein, such as the natural zeolite. Its recovery of nutrients from the hydrolysed urine part of the mixture is similarly comparable to the recovery accomplished when using peat. Hence, the processed coconut shell may in essence be interchangeable with peat in the method aspect described herein.

By the term "mixture", is herein meant an intermediate product obtained by mixing at least two components. At least one of the components is a fluid component, such as a liquid component, which mainly comprises urine, and at least one of the components is a solid component, which mainly comprises the cation exchanger.

In some instances, step 101 may initially comprise washing the cation exchanger with a magnesium solution in order to sorb magnesium to the cation exchanger, thereby generating a cation exchanger comprising sorbed magnesium. Washing may for example be conducted by adding the cation exchanger to a bath of magnesium solution, while slightly mixing the bath during a period of 1-2 minutes to allow magnesium sorption to the cation exchanger. Thereafter the cation exchanger comprising magnesium may be left to sediment for 60 minutes and is thereafter filtered and may subsequently be dried.

Magnesium may, in the washing step, be sorbed to the cation exchanger, such as to zeolite, by ion exchange. The ion exchange may occur within the zeolite by ion exchanging a naturally bound cation, such as e.g. calcium or potassium, with the magnesium. The ion exchange of the zeolite's bound cation occurs since the zeolite has a high affinity to ammonium.

In the washing step magnesium may be sorbed to the cation exchanger, such as to peat (and/or to processed coconut shell), by adsorption. The adsorption may occur onto a surface of the peat. Hydrogen ions on the surface of peat are commonly ion exchanged with magnesium ions during adsorption of the magnesium.

One example of a magnesium solution is MgSO₄. In addition, a pH regulating agent may be added to the cation exchanger comprising magnesium. The pH regulating agent may be sodium hydroxide (NaOH) and/or magnesium oxide (MgO).

The cation exchanger comprising sorbed magnesium may in step 101 be batch-wisely added, i.e. the amount of cation exchanger comprising sorbed magnesium needed for the recovery of the nutrients in the hydrolysed urine, may be added in a certain amount to a batch of the hydrolysed urine for performing one cycle of the method according to the invention. One cycle of the method may comprise performing at least the steps a), b) and c), once.

Alternatively, the cation exchanger comprising sorbed magnesium may in step 101 be continuously added to the hydrolysed urine.

When the cation exchanger comprising sorbed magnesium is added to the hydrolysed urine in step 101 at least the following reactions may take place within the hydrolysed urine comprised in a solution: first of all, the cation exchanger comprising sorbed magnesium releases at least a part, such as at least 40 %, of the sorbed magnesium to the hydrolysed urine solution in the mixture. The magnesium released in the hydrolysed urine solution and the increased pH trigger precipitation of phosphorus in the hydrolysed urine solution. Thus, precipitation of phosphorus occurs in the liquid part of the mixture. The cation exchanger from which the sorbed magnesium has been released readily sorb(s) ammonium, which is present in the hydrolysed urine solution or liquid part of the mixture. The precipitated phosphorus and the cation exchanger comprising sorbed ammonium constitute a nutrient sludge within the mixture.

In an example, steps a) to c) (e.g. 101-103) are conducted at a temperature in the range of from 0 to 65 °C, such as in the range of from 5 to 50 °C, or for example in the range of from 10 to 35 °C. In some examples, steps a) to c) are conducted at a temperature in the range of from 15 to 30 °C, such as in the range of from 18 to 25 °C.

Depending on the presence of other compounds in the urine/mixture, phosphorus may, in the hydrolysed urine solution or liquid part of the mixture, be precipitated in the form of one or more of struvite, K-struvite , dittmarite, brushite, newberyite, montgomeryite and calcium phosphate. Phosphorus may in the precipitate be precipitated in the form of phosphate. Precipitated struvite is typically in the form of pure crystals of struvite.

The nutrient sludge may further comprise one or more of nesquehonite, magnesium hydroxide, calcium hydroxide, magnesium carbonate, calcium carbonate, dolomite, magnesium sulphate, calcium sulphate, epsomite, brucite and potassium sulphate. In particular where the cation exchanger has been washed, or pre-treated, with a MgSO₄ solution, different sulphur containing compounds may precipitate in the nutrient sludge. In an example, the nutrient sludge further comprises one or more of Mg, K, Ca and Fe. In an example, the nutrient sludge further comprises one or more of Co, Mn, Mo, and Zn. In an example, the nutrient sludge further comprises S. This for instance applies when the washing solution for optional pre-washing or pre-loading of the cation exchanger contains S.

In embodiments wherein the cation exchanger further comprises a pH regulating agent such as NaOH, such a pH regulating agent may be present within the range of from 2 to 12 g agent per 100 g cation exchanger.

In embodiments wherein a pH regulating agent such as NaOH is added in step 103, said NaOH may have a concentration within the range of from 1 to 10 M, such as from 3 to 7 M, or for example 3 M, and may be added in an amount within the range of from 1 to 8 ml or such as 2 to 3 ml per 100 ml urine solution comprising the added composition of cation exchanger comprising magnesium.

As depicted in step 104, a nutrient sludge comprising cation exchanger comprising sorbed ammonium and precipitated phosphorus is produced as a result of the method. In an optional subsequent optional step (not shown) following step 104, the nutrient sludge may be allowed to sediment prior to a filtering step 105.

Step a) of the method 100 for recovering nutrients from hydrolysed urine may be preceded by an initial step, i.e. a step which is performed prior to step 101. In such an initial step hydrolysed urine is provided by hydrolysing urea to ammonium. The process in which urea, a component in urine, is converted to ammonium occurs naturally in a urine solution and is catalyzed by the enzyme urease. Normally the conversion of urea to ammonium is a slow process which may take 10 to 15 days for 85 to 95 % conversion of urea to ammonium. Normal conditions should in this context be understood as e.g. temperatures in the range of from 10 to 30 °C.

In embodiments thereof, the inventive method further comprises hydrolysing urine by hydrolysis of urea. Urea hydrolysis may be accomplished by firstly accumulating urine in a vessel, e.g. an ammonification tank. The urine is subsequently stored, such as for at least three weeks, thereby generating a stored urine solution. Next, fresh urine, which may comprise small amounts of faeces, may be introduced into the ammonification tank and mixed with the stored urine solution in the tank. This stepwise procedure of providing a stored urine and solution and mixing it with a fresh urine solution, may accomplish urea hydrolysis much faster than in previously known methods. The ratio of stored urine solution to fresh urine solution in the obtained mixture may be within the range of from 15 to 30 % : 70 to 85 % (based on the total amount of urine). By following this stepwise procedure, at least 80 % of the urea contained in the urine may be converted to ammonium 3 to 4 days after addition of the fresh urine solution.

It should be understood that the terms "stored" and "fresh" as used herein are to be interpreted as relative terms and not as absolute terms. Thus, when a urine solution is described as being "stored", this implies that the urine solution to a higher degree comprises ammonia in the form of ammonium compared to ammonia in the form of urea. On the contrary, when a urine solution is described as being "fresh", this implies that the urine solution to a higher degree comprises ammonia in the form of urea compared to ammonia in the form of ammonium.

The method 100 for recovering nutrients from hydrolysed urine may be preceded by a further initial step, which is performed prior to step 101, and optionally prior to the step of hydrolysing urea to ammonium generating hydrolysed urine. This initial step comprises removing nearly all faeces from a black water solution comprising urea and faeces, thereby providing a urine solution.

The term "black water", as used herein should be understood as waste water, i.e. any water that has been adversely affected in quality by anthropogenic influence, comprising urine and faecal matter.

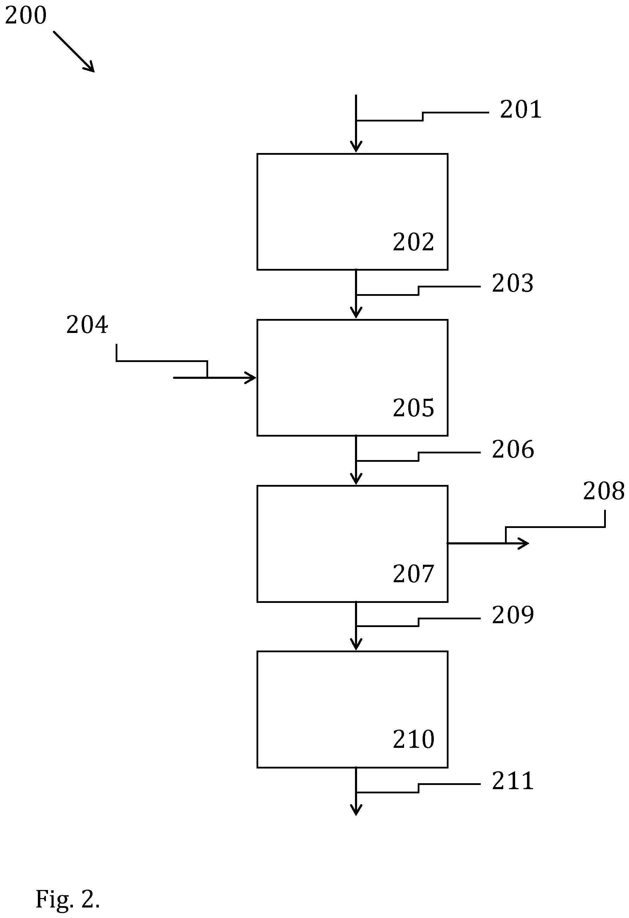

Figure 2 is a schematic representation depicting a system 200 for carrying out the inventive method. Urine optionally enters, via duct 201, an optional ammonification tank 202 wherein urea can be hydrolysed into ammonium such as to produce a hydrolysed urine solution. The hydrolysed urine solution is optionally forwarded via duct 203 to a reaction vessel 205. A cation exchanger comprising sorbed magnesium is added via optional duct 204 to the reaction vessel 205. Within the reaction vessel 205, the cation exchanger comprising sorbed magnesium releases at least a part of its sorbed magnesium to the hydrolysed urine. The released magnesium in the hydrolysed urine solution triggers the precipitation of phosphorus in the hydrolysed urine solution. The cation exchanger which has released the magnesium can sorb ammonium which is present in the hydrolysed urine solution. A nutrient sludge of precipitated phosphorus and cation exchanger comprising sorbed ammonium is formed within the reaction vessel 205 and may be allowed to sediment to a lower part of the reaction vessel 205. The nutrient sludge and the remaining liquid phase, which has not been transformed into the nutrient sludge, are forwarded via duct 206 to a filter 207, wherein the precipitate comprising at least phosphorus and cation exchanger comprising ammonium can be recovered. Thereby generating a nutrient product. The remaining hydrolysed urine solution is optionally sent to further treatment via duct 208. The nutrient product can optionally be forwarded via duct 209 to an optional dryer 210, arranged to dry the nutrient product and to generate a dry fertilizer product, which can optionally be forwarded to storage via duct 211.

Advantageously, the reaction vessel comprised in the system for carrying out the inventive method, allows efficient addition and mixture of hydrolysed urine with cation exchanger. The mixture may be obtained by injecting air, having a pressure within the range of from 0.5 to 5 bar, into the reaction vessel, thereby mixing the hydrolysed urine with the cation exchanger. The reactions of releasing magnesium from the cation exchanger to the hydrolysed urine solution, precipitating phosphorus to the hydrolysed solution and sorbing ammonium to the cation exchanger which takes place in the method for recovering nutrients from hydrolysed urine, can advantageously be performed in a reaction vessel as depicted in Figure 2.

### EXAMPLES

### Example I: Preparing a zeolite and/or peat loaded with magnesium

### Aim of Example I

To provide a composition of zeolite and/or peat comprising magnesium.

### Materials and methods

The zeolite used was clinoptilolite. Clinoptilolite naturally comprises bound calcium and potassium ions The grain size of the clinoptilolite was 700 µm. A commercially available peat named Hammenhögs (natural peat), comprising 60 % by volume of sphagnum H2-4 and 40 % by volume of sphagnum H5-7, was used.

300 g zeolite was put in a bath of 900 ml magnesium salt solution in a glass beaker, which generated a wash mixture comprising zeolite. The wash mixture comprising zeolite was mixed with a glass staff, for 1-2 min, in order for the zeolite to become loaded with magnesium and thereafter allowed to sediment for 60 min. The obtained supernatant was decanted to obtain a zeolite sludge comprising magnesium, which was subsequently heat treated at 30-40 °C until a thicker zeolite sludge comprising magnesium was achieved, and was thereafter air dried for several days to finally obtain a composition of zeolite comprising magnesium.

100 g peat was put in a bath of 600 ml magnesium salt solution in a glass beaker, which generated a wash mixture comprising peat. The wash mixture comprising peat was mixed with a glass staff, for 1-2 min, in order for the peat to become loaded with magnesium and thereafter allowed to sediment for 60 min. The obtained supernatant was sampled and the remaining sediment peat sludge comprising magnesium was filtered through a coffee filter to obtain wet peat comprising magnesium. The wet peat comprising magnesium was air dried for 1 day to finally obtain a composition of peat comprising magnesium.

The composition of zeolite comprising magnesium was mixed with the composition of peat comprising magnesium. Two combinations with the ratios of 25 % dry weight of peat comprising magnesium and 75 % dry weight of zeolite comprising magnesium, respectively 50 % dry weight of peat comprising magnesium and 50 % dry weight of zeolite comprising magnesium, were mixed. Further combinations of the composition of zeolite comprising magnesium was mixed with natural peat respectively of the composition of peat comprising magnesium was mixed with natural zeolite.

### Results and conclusion

A composition of zeolite and/or peat comprising magnesium was/were obtained. At least 50 % of the naturally bound cation, such as calcium or potassium, within the zeolite was ion exchanged with the magnesium.

### Example II: Preparing hydrolysed urine

### Aim of Example II

To provide a hydrolysed urine solution by converting urea into ammonium.

### Materials and methods

Urine was collected in a vessel, such as an ammonification tank. The urine was stored for at least three weeks, which generated a stored urine solution. Fresh urine, which comprised small amounts of faeces, was added to the ammonification tank and mixed with the stored urine solution therein. The ratio between stored urine solution and added fresh urine was within the range of from 15 to 30 % : 70 to 85 % based on the total amount of urine. Urea was then further allowed to convert into ammonium.

### Results and conclusion

A hydrolysed urine solution was obtained within 3 to 4 days after addition of fresh urine to the ammonification tank. At least 80 % of the total amount of urea comprised in the urine (stored and fresh) was converted into ammonium.

### Example III: Recovering nutrients from hydrolysed urine

### Aim of Example III

To provide a nutrient sludge comprising precipitated phosphorus and zeolite and/or peat comprising sorbed ammonium.

### Materials and methods

The obtained hydrolysed urine solution from Example II was analysed and demonstrated a content of 55 mg/l magnesium, 1090 mg/l calcium, 0.7 mg/l sulphate, 777 mg/l ammonium, 22.7 mg/l phosphorus and 413 mg/l potassium, and a pH of 9.4. The hydrolysed urine solution was 10-fold diluted. In this Example, 0.5 liter of the hydrolysed urine solution was diluted with 5 liter double deionized water (Millipore), in order to imitate the flushing conditions in a WC. The diluted hydrolysed urine solution was transferred to a 250 ml glass bottle. 20 g of the composition comprising zeolite and/or peat comprising magnesium was/were added to 100 ml of the diluted hydrolysed urine solution in the glass bottle Thereafter the composition was mixed with the diluted hydrolysed urine solution and the pH decreased to a pH of below 9. After that a pH regulating agent, 3 M NaOH in an amount of 2 to 3 ml, was added to the glass bottle, resulting in a pH of above 10. This first of all generated release of magnesium from the zeolite and/or peat in the diluted urine solution. The magnesium released in the diluted hydrolysed urine solution thereafter triggered precipitation of phosphorus in the diluted hydrolysed urine solution. Thus, precipitation of phosphorus took place in the liquid part of the mixture. The zeolite and/or peat from which the sorbed magnesium was released readily sorbed ammonium, which was present in the diluted hydrolysed urine solution or liquid part of the mixture. The precipitated phosphorus and the zeolite and/or peat, now comprising sorbed ammonium, formed a nutrient sludge within the mixture. The nutrient sludge was allowed to sediment for 60 min within the glass bottle. Thereafter the supernatant was sampled for analysis.

### Results and conclusion

A nutrient sludge comprising precipitated phosphorus and zeolite and/or peat comprising sorbed ammonium was obtained. The nutrient sludge comprised at least 50 % by weight of recovered ammonium and at least 90 % by weight of recovered phosphorus from the diluted hydrolysed urine solution.

Table 1 shows the resulting amount of ammonium and phosphorus, the latter in the form of phosphate, recovered in the nutrient sludge. Natural zeolite (nat. zeolite) and natural peat (nat. peat), as well as a combination of natural zeolite with natural peat, neither of which comprising any magnesium, were tested as control samples. Further test results for different combinations and ratios of zeolite comprising magnesium (Mg-zeolite), peat comprising magnesium (Mg-peat), natural zeolite and natural peat, are presented in Table 1. The tests were made in duplicates. Decrease of ammonium and phosphorus from the urine solution was calculated by subtracting the remaining amounts in the sampled supernatant from the initial amounts present in the urine solution. The percentages of decreased ammonium and phosphorus in the supernatant directly correspond to the percentage of recovered ammonium and phosphorus in the nutrient sludge, presented in Table 2.

**Table 1: Amounts of ammonium and phosphorus decreased from the urine solution**

| **Composition** | **NH₄⁺ decrease [mg/l]** | **NH₄⁺ decrease %** | **Phosphorus decrease [mg/l]** | **Phosphorus decrease %** |
|---|---|---|---|---|
| Nat. zeolite | 575 | 74 | 21,20 | 93 |
| | 592 | 76 | 20,90 | 92 |
| Nat. peat | 509 | 65 | 15,25 | 67 |
| | 516 | 66 | 15,35 | 68 |
| 25 % nat. peat + 75 % nat. zeolite | 599 | 77 | 21,70 | 96 |
| | 595 | 77 | 21,20 | 93 |
| 50 % nat. peat + 50 % nat. zeolite | 612 | 79 | 20,20 | 89 |
| | 597 | 77 | 20,35 | 90 |
| 25 % Mg-peat + 75 % nat. zeolite | 584 | 75 | 21,45 | 95 |
| | 572 | 74 | 21,40 | 94 |
| 50 % Mg-peat + 50 % nat. zeolite | 494 | 64 | 21,70 | 96 |
| | 571 | 73 | 21,60 | 95 |
| 25 % nat. zeolite + 75 % Mg-zeolite | 548 | 71 | 21,70 | 96 |
| | 553 | 71 | 22,10 | 97 |
| 50 % nat. peat + 50 % Mg-zeolite | 542 | 70 | 22,25 | 98 |
| | 553 | 71 | 21,85 | 96 |
| 25 % Mg-peat + 75 % Mg-zeolite | 565 | 73 | 21,85 | 96 |
| | 579 | 75 | 21,80 | 96 |
| 50 % Mg-peat + 50 % Mg-zeolite | 510 | 66 | 21,75 | 96 |
| | 498 | 64 | 21,80 | 96 |

A high recovery of both ammonia (73, 75 %) and phosphorus (96, 96 %) was obtained by using a combination of 25 % of peat (dry weight) comprising magnesium and 75 % of zeolite (dry weight) comprising magnesium.

Based on the table above, an advantageous combination seems to be a combination of peat comprising magnesium and natural zeolite. Such a combination is moreover advantageous in that pre-loading of peat with magnesium is technically relatively easy. The pH adjustment moreover becomes easier when peat is at least partly used.

The nutrient uptake in solid form is presented as mg nutrient per g composition in Table 2 below.

**Table 2: Amounts of ammonia and phosphorus recovered.**

| **Composition** | **NH₄⁺ recovery [mg/g]** | **Phosphorus recovery [mg/g]** |
|---|---|---|
| Nat. zeolite | 5,75 | 0,21 |
| | 5,92 | 0,21 |
| Nat. peat | 5,09 | 0,15 |
| | 5,16 | 0,15 |
| 25 % nat. peat + 75 % nat. zeolite | 5,99 | 0,22 |
| | 5,95 | 0,21 |
| 50 % nat. peat + 50 % nat. zeolite | 6,12 | 0,20 |
| | 5,97 | 0,20 |
| 25 % Mg-peat + 75 % nat. zeolite | 5,84 | 0,22 |
| | 5,72 | 0,21 |
| 50 % Mg-peat + | 4,94 | 0,22 |
| 50 % nat. zeolite | 5,71 | 0,22 |
| 25 % nat. zeolite + 75 % Mg-zeolite | 5,48 | 0,22 |
| | 5,53 | 0,22 |
| 50 % nat. peat + 50 % Mg-zeolite | 5,42 | 0,22 |
| | 5,53 | 0,22 |
| 25 % Mg-peat + 75 % Mg-zeolite | 5,65 | 0,22 |
| | 5,79 | 0,22 |
| 50 % Mg-peat + 50 % Mg-zeolite | 5,10 | 0,22 |
| | 4,98 | 0,22 |

### Example IV: Preparing a nutrient product

### Aim of Example IV

To provide a nutrient product comprising precipitated phosphorus and zeolite comprising sorbed ammonium.

### Materials and methods

The nutrient sludge, which was allowed to sediment according to the procedure described in Example III, was filtered through a filter arranged in a lower part of the conical bottom of the reaction vessel. A resulting filtrate, i.e. a nutrient product comprising precipitate comprising phosphorus and zeolite comprising ammonium was obtained from the nutrient sludge.

### Results and conclusion

A nutrient product comprising precipitated phosphorous and zeolite comprising sorbed ammonium was obtained. The nutrient product comprised at least 50 % by weight of recovered ammonium and at least 90 % by weight of recovered phosphorus from the hydrolysed urine solution.

It was hypothesized that the nutrient recovery, in particular of phosphorous, might be augmented, i.e. the decrease of phosphorous from the supernatant could be as high as 98-99 %, if the precipitation conditions are more optimized and/or a filtering operation is performed.

### Example V: Preparing a fertilizer

### Aim of Example V

To provide a fertilizer comprising ammonium and phosphorus.

### Materials and methods

The nutrient product from part IV was dried to obtain a dry, ready to use, fertilizer comprising ammonium and phosphorus.

### Results and conclusion

A fertilizer comprising ammonium and phosphorus was obtained. The content of N, P, K, S and Mg was calculated in the fertilizer and resulted in 28 (N):3.7 (P): 0.9 (K): 6.2 (S): 1.3 (Mg). The resulting figures were calculated based on the chemical element present.

### Example VI: Optimization of the content of Mg-peat and natural zeolite in the composition for recovering nutrients in hydrolysed urine

This Example VI comprises three subtests A, B and C according to Table 3 below. In subtest A, nutrients are recovered from non-diluted hydrolysed urine using a composition of sieved Mg-peat and natural zeolite, in subtest B, nutrients are recovered from 20-fold diluted hydrolysed urine using a composition of non-sieved Mg-peat and natural zeolite, and in subtest C, nutrients are recovered from non-diluted hydrolysed urine using a composition of non-sieved Mg-peat and natural zeolite.

**Table 3: Subtests**

| Subtest | Recovery carrier | Sample urine |
|---|---|---|
| A | sieved Mg-peat and nat. zeolite | hydrolysed urine |
| B | non-sieved Mg-peat and nat. zeolite | 20-fold diluted hydrolysed urine |
| C | non-sieved Mg-peat and nat. zeolite | hydrolysed urine |

These subtests were performed as described in Example I to V unless stated otherwise.

### VI-I: Preparing Mg-loadedpeat

The zeolite and peat used here were of the same origin as defined in Example I. A: A 1 M magnesium salt solution comprising 15860 mg/l magnesium, 27400 mg/l calcium, 68200 mg/l sulphate with a pH of 7.28, and a 3 M NaOH solution, were used in this subtest. The peat was sieved through an 18-mesh sieve to obtain sieved peat. 400 g sieved peat was put in a plastic bucket. 1800 ml 1 M magnesium salt solution was added to the plastic bucket comprising sieved peat, which generated a wash mixture comprising sieved peat. The wash mixture comprising sieved peat was mixed with a glass staff, for 1-2 min in order for the peat to become loaded with magnesium and the mixed wash mixture was thereafter allowed to sediment for 24 h. The obtained supernatant was sampled and demonstrated a content of 10640 mg/l magnesium, 0 mg/l calcium, 45600 mg/l sulphate with a pH of 4.17, and the remaining sediment peat sludge comprising magnesium was filtered through a plankton filter having a mesh size of 250 micron, to obtain wet peat comprising magnesium. The wet peat comprising magnesium was air dried for 24 h to finally obtain a composition of peat comprising magnesium.

The composition of peat comprising magnesium was mixed with natural zeolite (nat. zeolite) at different ratios, and control compositions were prepared (see Table 4).

**Table 4: Washed and prepared compositions.**

| Sample | Composition |
|---|---|
| | 20 g Mg-peat |
| | 40 g Mg-peat |
| Controls | 20 g nat. zeolite |
| | 40 g nat. zeolite |
| | 60 g nat. zeolite |
| | 6 g Mg-peat + 14 g nat. zeolite (30/70 %) |
| 20 g additive series | 8 g Mg-peat + 12 g nat. zeolite (40/60 %) |
| | 10 g Mg-peat + 10 g nat. zeolite (50/50 %) |
| | 12 g Mg-peat + 28 g nat. zeolite (30/70 %) |
| 40 g additive series | 16 g Mg-peat + 24 g nat. zeolite (40/60 %) |
| | 20 g Mg-peat + 20 g nat. zeolite (50/50 %) |
| | 18 g Mg-peat + 42 g nat. zeolite (30/70 %) |
| 60 g additive series | 24 g Mg-peat + 36 g nat. zeolite (40/60 %) |
| | 30 g Mg-peat + 30 g nat. zeolite (50/50 %) |

B: A 2 M magnesium salt solution, comprising 32400 mg/l magnesium, 18060 mg/l calcium, 174400 mg/l sulphate with a pH of 7.38, and a 3 M NaOH solution, were used. The peat which was used in this subset comprised peat plant fibers having a length of less than 7 cm. 1000 g of non-sieved peat was put in a plastic bucket. 3500 ml 2 M magnesium salt solution was added to the plastic bucket comprising peat, which generated a wash mixture comprising peat. Further, in similarity with subtest A, the wash mixture comprising peat was mixed with a glass staff, for 1-2 min in order for the peat to become loaded with magnesium and the mixed wash mixture was thereafter allowed to sediment for 24 h. The obtained supernatant was sampled and demonstrated a content of 22000 mg/l magnesium, 17360 mg/l calcium, 129800 mg/l sulphate with a pH of 3.72. A composition of peat comprising magnesium was thereafter obtained performing the described procedure in subtest A, and was mixed with natural zeolite at the same ratios as in Table 4. The controls used in subtest B are disclosed in Table 5.

**Table 5: Washed and prepared control compositions.**

| Sample | Composition |
|---|---|
| | 20 g Mg-peat |
| | 30 g Mg-peat |
| | 40 g Mg-peat |
| Controls | 30 g nat. peat |
| | 20 g nat. zeolite |
| | 30 g nat. zeolite |
| | 40 g nat. zeolite |

C: The same magnesium salt solution as described in subtest B was used, and the composition of peat comprising magnesium was obtained in the same way as in the described procedure in subtest B. The composition was mixed with natural zeolite at the same ratios as the 60 g additive series of Table 4 with the additional composition of 40 g Mg-peat mixed with 20 g natural zeolite (66.7/33.3 %). The same control compositions as in Table 5 were used.

### VI-II: Preparing hydrolysed urine

The same procedure as described in Example II was used for obtaining the hydrolysed urine solutions by hydrolyzing urea to ammonium. Three different hydrolysed urine solutions were obtained, one for each of the three subtests A, B, and C.

### VI-III: Recovery of nutrients from hydrolysed urine

A: The hydrolysed urine solution A obtained from VI-II was analysed and demonstrated a content of 0 mg/l magnesium, 6735 mg/l calcium, 0 mg/l sulphate, 7390 mg/l ammonium, 281.5 mg/l phosphorus and 2170 mg/l potassium, with a pH of 9.27. The hydrolysed urine solution was not diluted. In this subtest, each of the compositions of Table 4, and duplicates thereof, was added to 250 ml glass beakers. Thereafter, 100 ml of the hydrolysed urine solution was added to each of the glass beakers comprising the different compositions. Thereafter, the same procedure as described in Example III followed, except from that the 3 M NaOH was added in an amount of 4 to 10 ml to each of the glass beakers.

B: The hydrolysed urine solution B obtained from VI-II was 20-fold diluted with double deionized water (Millipore) in order to imitate the flushing conditions in a WC. The diluted hydrolysed urine was analysed and demonstrated a content of 0 mg/l magnesium, 306 mg/l calcium, 0 mg/l sulphate, 638 mg/l ammonium, 24.5 mg/l phosphorus and 533 mg/l potassium, with a pH of 9.17. In this subtest, each of the compositions, and a duplicate thereof, described in VI-I subtest B was added to 250 ml glass beakers. Thereafter, the same procedure as described in VI-III subtest A followed.

C: The hydrolysed urine solution C obtained from VI-II was analysed and demonstrated a content of 0 mg/l magnesium, 3213 mg/l calcium, 0 mg/l sulphate, 7250 mg/l ammonium, 258.3 mg/l phosphorus and 10000 mg/l potassium, with a pH of 9.46. The hydrolysed urine solution was not diluted. In this subtest, each of the compositions, and a duplicate thereof, described in VI-I subtest C was added to 250 ml glass beakers. Thereafter, the same procedure as described in VI-III subtest A followed.

### VI-IV: Preparing a nutrient product

To provide a nutrient product comprising precipitated phosphorus, peat comprising sorbed ammonium and natural zeolite comprising sorbed ammonium, the nutrient sludges resulting from VI-III were filtered according to the procedure described in Example IV.

### VI- V: Drying the filtrate

The same procedure as described in Example V was used for drying the filtrates A-C from VI-IV.

### Results and conclusion

VI-I - VI-III resulted in the recovery of nutrient from urine solutions in accordance with the following:
A: The nutrient sludge derived from subtest A comprised at least 35 % by weight of recovered ammonium and at least 90 % by weight of recovered phosphorus from the hydrolysed urine solution.

Table 6 shows the resulting amount of ammonium and phosphorus, the latter in the form of phosphate, recovered in the nutrient sludge of this subtest when using the respective compositions from Table 4. The decrease of ammonium and phosphorus from the urine solution was calculated the same way as described in Example III.

**Table 6: Amount of ammonium and phosphorus decreased from the urine solution in subtest A.**

| **Composition** | **NH₄⁺ decrease %** | **Phosphorus decrease %** |
|---|---|---|
| 20 g nat. zeolite | 35 | 98 |
| | 37 | 98 |
| 40 g nat. zeolite | 44 | 94 |
| | 47 | 95 |
| 60 g nat. zeolite | 54 | 96 |
| | 58 | 96 |
| 20 g Mg-peat | 32 | 98 |
| | 32 | 98 |
| 40 g Mg-peat | 39 | 97 |
| | 38 | 97 |
| 6 g Mg-peat 14 g nat. zeolite | 37 | 99 |
| | 35 | 99 |
| 8 g Mg-peat 12 g nat. zeolite | 37 | 98 |
| | 38 | 97 |
| 10 g Mg-peat 10 g nat. zeolite | 38 | 98 |
| | 39 | 98 |
| 12 g Mg-peat 28 g nat. zeolite | 46 | 97 |
| | 46 | 97 |
| 16 g Mg-peat 24 g nat. zeolite | 52 | 97 |
| | 48 | 97 |
| 20 g Mg-peat 20 g nat. zeolite | 52 | 98 |
| | 48 | 97 |
| 18 g Mg-peat 42 g nat. zeolite | 61 | 98 |
| | 60 | 98 |
| 24 g Mg-peat 36 g nat. zeolite | 65 | 97 |
| | 65 | 98 |
| 30 g Mg-peat 30 g nat. zeolite | 62 | 96 |
| | 60 | 96 |

A particularly high recovery of both ammonia (65 %) and phosphorus (97-98 %) was obtained by using a combination of 24 g (40 %) of peat (dry weight) comprising magnesium and 36 g (60 %) of natural zeolite (dry weight).

B: The nutrient sludge derived according to the procedures of subtest B comprised at least 48 % by weight of recovered ammonium and at least 90 % by weight of recovered phosphorus from the hydrolysed urine solution.

Table 7 shows the resulting amount of ammonium and phosphorus recovered in the nutrient sludge of this subtest.

**Table 7: Amount of ammonium and phosphorus decreased from the urine solution in subtest B.**

| **Composition** | **NH₄⁺ decrease %** | **Phosphorus decrease %** |
|---|---|---|
| 20 g nat. zeolite | 65 | 100 |
| | 57 | 100 |
| 40 g nat. zeolite | 73 | 100 |
| | 73 | 100 |
| 60 g nat. zeolite | 84 | 100 |
| | 75 | 99 |
| 30 g nat. peat | 66 | 24 |
| | 60 | 32 |
| 20 g Mg-peat | 42 | 89 |
| | 45 | 88 |
| 30 g Mg-peat | 45 | 88 |
| | 50 | 93 |
| 40 g Mg-peat | 62 | 88 |
| | 55 | 90 |
| 6 g Mg-peat + 14 g nat. zeolite | 53 | 97 |
| | 55 | 97 |
| 8 g Mg-peat + | 51 | 96 |
| 12 g nat. zeolite | 48 | 97 |
| 10 g Mg-peat + 10 g nat. zeolite | 51 | 93 |
| | 58 | 94 |
| 12 g Mg-peat + 28 g nat. zeolite | 77 | 97 |
| | 75 | 98 |
| 16 g Mg-peat + 24 g nat. zeolite | 70 | 97 |
| | 71 | 98 |
| 20 g Mg-peat + 20 g nat. zeolite | 67 | 97 |
| | 66 | 98 |
| 18 g Mg-peat + 42 g nat. zeolite | 80 | 99 |
| | 79 | 99 |
| 24 g Mg-peat + 36 g nat. zeolite | 79 | 98 |
| | 80 | 98 |
| 30 g Mg-peat + 30 g nat. zeolite | 77 | 97 |
| | 77 | 97 |

A particularly high recovery of both ammonia (>78 %) and phosphorus (>97 %) was obtained by using a combination of 18 g, 24 g (30 %, 40 %) of peat (dry weight) comprising magnesium and 42 g, 36 g (70 %, 60 %) of natural zeolite (dry weight), respectively. Hence, a high recovery of nutrients was obtained from the diluted urine. Since the diluted urine roughly reflects the conditions in a common WC, these results from subtest B therefore show that the method can be readily applied in practice.

C: The nutrient sludge of subtest C comprised at least 60 % by weight of recovered ammonium and at least 90 % by weight of recovered phosphorus from the hydrolysed urine solution.

Table 8 shows the resulting amount of ammonium and phosphorus recovered in the nutrient sludge of this subtest.

**Table 8: Amount of ammonium and phosphorus decreased from the urine solution in subtest C.**

| **Composition** | **NH₄⁺ decrease %** | **Phosphorus decrease %** |
|---|---|---|
| 20 g nat. zeolite | 34 | 74 |
| | 31 | 74 |
| 40 g nat. zeolite | 32 | 78 |
| | 44 | 81 |
| 60 g nat. zeolite | 72 | 96 |
| | 63 | 95 |
| 30 g nat. peat | 71 | 85 |
| | 76 | 84 |
| 20 g Mg-peat | 61 | 97 |
| | 54 | 97 |
| 30 g Mg-peat | 65 | 98 |
| | 64 | 99 |
| 40 g Mg-peat | 62 | 98 |
| | 66 | 98 |
| 18 g Mg-peat + 42 g nat. zeolite | 79 | 99 |
| | 77 | 99 |
| 24 g Mg-peat + 36 g nat. zeolite | 78 | 98 |
| | 77 | 100 |
| 30 g Mg-peat + 30 g nat. zeolite | 80 | 98 |
| | 81 | 98 |
| 40 g Mg-peat + 20 g nat. zeolite | 60 | 99 |
| | 63 | 99 |

A particularly high recovery of both ammonia (>76 %) and phosphorus (> 97 %) was obtained by using a combination of 18 g, 24 g, 30 g (30 %, 40 %, 50 %) of peat (dry weight) comprising magnesium and 42 g, 36 g, 30 g (70 %, 60 %, 50 %) of natural zeolite (dry weight).

Generally, if it is desired to recover a higher amount of NH4⁺ from the hydrolysed urine, the amount of natural zeolite may be increased in the composition.

A composition of peat comprising magnesium is advantageous in that pre-loading of peat with magnesium is technically relatively easy. The pH adjustment moreover becomes easier when peat is at least partly used as compared to when zeolite is solely used as the cation exchanger.

When comparing the resulting values of subtest A of Table 6 for the compositions comprising sieved peat with the values of subtest B of Table 7 and of subtest C of Table 8, respectively, for the compositions comprising non-sieved peat, the percentages of recovered ammonium in the nutrient sludge are higher when non-sieved peat has been used. However, in all subtests A to C, higher peat amounts in the composition shows a decreasing ammonium uptake, at least partly due to the clogging effect of very fine peat particles on the zeolite. For practical reasons a well defined peat particle size within the range of from 1 to 6 mm in diameter, such as from 1 to 3 mm in diameter would be preferable. Plant fibers of peat having a larger peat particle size than the defined peat particle size may be hard to mix and may float on the surface of the hydrolysed urine.

Moreover, the nutrient product of subtest A was in VI-IV found to comprise at least 35 % by weight of recovered ammonium and at least 90 % by weight of recovered phosphorus, the nutrient product of subtest B was found to comprise at least 48 % by weight of recovered ammonium and at least 93 % by weight of recovered phosphorus, and the nutrient product of subtest C was found to comprise at least 60 % by weight of recovered ammonium and at least 98 % by weight of recovered phosphorus.

Fertilizers comprising ammonium and phosphorus were obtained from VI-V. The individual contents of N, P, K, S and Mg in the fertilizer are expected to be similar to the fertilizer obtained in Example V.

### Example VII: Testing an alternative type of peat for recovering nutrients in hydrolysed urine

In this Example VII, an alternative type of peat was used, namely a commercially available peat named Scan peat (natural peat), comprising 100 % by volume of sphagnum H3-4, having a particle size of up to 6 mm.

In this Example, nutrients were recovered from non-diluted hydrolysed urine using a composition of non-sieved Mg-peat (wherein the peat is Scan peat) and natural zeolite.

This test was performed as described in Example VI unless stated otherwise.

Compositions of 1g Mg-peat, 12 g Mg-peat, 25 g Mg-peat, 1 g Mg-peat mixed with 24 g nat. zeolite, 6 g Mg-peat mixed with 19 g nat. zeolite, 12.5 g Mg-peat mixed with 12.5 g nat. zeolite, 1 g Mg-peat mixed with 49 g nat. zeolite, 12.5 g Mg-peat mixed with 37.5 g nat. zeolite, and 25 g Mg-peat mixed with 25 g nat. zeolite, were tested.

Out of these compositions tested in the inventive method according to Example VI, a particularly high recovery of both ammonia (>78 %) and phosphorus (> 96 %) was obtained by using a combination of 1 g (2 %) of peat (dry weight) comprising magnesium and 49 g (98 %) of natural zeolite (dry weight). Hence, a high amount of both ammonia and phosphorus may be obtained using a lower amount of peat (Scan peat), as a cation exchanger in the inventive method, as compared to the amount of peat (Hammenhögs) used in the Example I to VI.

Not only did the peat used in this Example prove to have high efficiency as cation exchanger, requiring less amounts when using it in the method, it was also easy to mix with hydrolysed urine, assumingly due to its small particle size of up to 6 mm.

### Example VIII: Testing the inventive method in the system for recovering nutrients in hydrolysed urine

The hereinafter described test-series (subtests D to F) were tested in the system as described in relation to Fig. 2 for carrying out the inventive method. The test set-up may be suitable for a one-family house. Two identical systems were used for conducting duplicates of each test in the test-series. The two identical systems were named with the suffixes 1 and 2 in the hereinafter described tests.

An air pump was arranged in direct connection to each of the reaction vessel of the system for injecting air into the same, thereby facilitating mixing therein.

The reaction vessel had a built-in filter, namely a 200 micron hose-filter arranged in the lower part of the reaction vessel, and a further filter, namely a 40 micron hose-filter, which was arranged separate to the reaction vessel but in connection thereto, for filtering the nutrient sludge thereby obtaining the nutrient product.

### VIII-I: Preparing Mg-loaded peat

The zeolite used was of the same origin as defined in Example I and the peat used was of the same origin as defined in Example VII. The 2 M magnesium salt solution, as defined in Example VI for subtest B, and a 3 M NaOH solution, were used. The peat was not sieved. The composition of peat comprising sorbed magnesium (Mg-peat) was obtained according to one of the previously stated Examples I to VII, and demonstrated a ratio of 97 mg magnesium to 1 g peat.

One ratio of peat comprising magnesium and natural zeolite (nat. zeolite) was used in this test-series, namely 30 g of the composition of peat comprising magnesium was mixed with 750 g of natural zeolite.

### VIII-II: Preparing hydrolysed urine

The same procedure as described in Example II was used for obtaining the hydrolysed urine solutions by hydrolyzing urea to ammonium.

### VIII-III: Recovery of nutrients from hydrolysed urine

The hydrolysed urine solution obtained from VIII-II was analyzed and demonstrated an average content of about 3745 mg/l ammonium and an average content of about 169 mg/l phosphorus, with an average pH of 9.5.The more exact numbers for use in the different subtests are shown in Table 9 below.

**Table 9: Amounts of ammonium and phosphorus present in the hydrolysed urine solution for use in the different subtests D to F.**

| **Subtest** | **pH** | **NH₄⁺ (mg/l)** | **Phosphorus (mg/l)** |
|---|---|---|---|
| D₁ | 9.4 | 3888 | 132.0 |
| E₁ | 9.5 | 3956 | 193.0 |
| F₁ | 9.5 | 3764 | 180.0 |
| D₂ | 9.4 | 3704 | 176.0 |
| E₂ | 9.4 | 3396 | 163.0 |
| F₂ | 9.5 | 3760 | 171.0 |

The hydrolysed urine solution was not diluted. 3 liter of hydrolysed urine solution was added to the reaction vessel of the system. Thereafter the composition of 30 g Mg-peat and 750 g natural zeolite was added to the reaction vessel comprising the hydrolysed urine solution. The NaOH-solution was further added thereto.

The mixing was facilitated by injecting air, having a pressure of about 1 bar, into the bottom part of the reaction vessel of the system, thereby mixing the hydrolysed urine with the composition of Mg-peat and natural zeolite, and further the NaOH.

This test-series constitutes of three subtests, namely subtest D, subtest E, and subtest F. The components in the subtests are subjected to different durations of mixing. In subtest D, the Mg-peat and natural zeolite were mixed with the hydrolysed urine in the reaction vessel for 2 min. Thereafter NaOH was added to the mixture. In subtest E, the Mg-peat, natural zeolite and NaOH were mixed with the hydrolysed urine for 2 sec. In subtest F, the Mg-peat, natural zeolite and NaOH were mixed with the hydrolysed urine for 30 sec. Hence, in subtest D, the mixing occurs after addition of Mg-peat and natural zeolite to the hydrolysed urine, but prior to the addition of NaOH, and in subtest E and F, the mixing occurs after the addition of Mg-peat, natural zeolite and NaOH.

### VIII-IV: Preparing a nutrient product

To provide a nutrient product comprising precipitated phosphorus, peat comprising sorbed ammonium and natural zeolite comprising sorbed ammonium, the nutrient sludges resulting from VIII-III were filtered according to the procedure described in Example IV through the 200 micron hose-filter (filter 1), and was additionally filtered through the 40 micron hose-filter (filter 2) arranged in connection to the reaction vessel.

### VIII-V: Drying the filtrate

The same procedure as described in Example V was used for drying the filtrates D-E from VIII-IV.

### Results and conclusion

VIII-I - VIII-III resulted in the recovery of nutrients from urine solutions in accordance with the following:
The nutrient sludge derived from the test-series D to F comprised at least 76 % by weight of recovered ammonium and at least 95 % by weight of recovered phosphorus from the hydrolysed urine solution (see Table 10).

The decrease of ammonium and phosphorus from the hydrolysed urine solution was calculated in the same way as described in Example III.

Further, two types of filters; the 200 micron hose-filter (filter 1), and the 40 micron hose-filter (filter 2) were used in the tests. The amounts of ammonium and phosphorus in the filtrated supernatant, i.e. filtrate, were tested after it had been filtrated through filter 1, and after it had been filtrated through both filter 1 and filter 2, respectively.

**Table 10: Amounts of ammonia and phosphorus in the filtrate after the filter operation (filter 1) or filter operations (filter 1+2), as well as amounts of ammonia and phosphorus decreased from the urine solution.**

| **Subtest** | **Filter type** | **pH** | **NH₄⁺ in the filtrate (mg/l)** | **Phosphorus in the filtrate (mg/l)** | **NH₄⁺ decrease %** | **Phosphorus decrease %** |
|---|---|---|---|---|---|---|
| D₁ | Filter 1 | 11.5 | 944 | 6.8 | 76 | 95 |
| | Filter 1+2 | 11.5 | 844 | 3.6 | 78 | 97 |
| E₁ | Filter 1 | 11.0 | 748 | 3.6 | 81 | 98 |
| | Filter 1+2 | 11.0 | 920 | 3.2 | 77 | 98 |
| F₁ | Filter 1 | 11.2 | 788 | 8.4 | 79 | 95 |
| | Filter 1+2 | 11.2 | 704 | 4.0 | 81 | 98 |
| D₂ | Filter 1 | 11.5 | 412 | 5.6 | 89 | 97 |
| | Filter 1+2 | 11.5 | 608 | 6.0 | 84 | 97 |
| E₂ | Filter 1 | 11.8 | 292 | 7.6 | 91 | 95 |
| | Filter 1+2 | 11.8 | 328 | 5.2 | 90 | 97 |
| F₂ | Filter 1 | 11.0 | 488 | 6.0 | 87 | 97 |
| | Filter 1+2 | 11.0 | 592 | 4.0 | 84 | 98 |

An overall high amount of both ammonium (76-91 %) and phosphorus (95-98 %) were recovered. This demonstrated that the inventive method is equally efficient for recovery of nutrients when performed in a larger scale.

It is noted that about 1 to 3 % of the total amount of ammonia comprised in the urine solution may be lost to the atmosphere during the test procedure. This may not be the case for phosphorus, since it is not as volatile as ammonium.

## Claims

1. A method for recovering nutrients from hydrolysed urine, comprising the steps of:
a) adding a cation exchanger comprising sorbed magnesium to the hydrolysed urine;
b) mixing the cation exchanger with the hydrolysed urine, and
c) adjusting the pH of the mixture to a pH of above 9,
such as to release at least a part of the sorbed magnesium from the cation exchanger to the urine solution of the mixture, precipitate phosphorus in the urine solution, and sorb at least part of the ammonium to the cation exchanger,
thereby providing a nutrient sludge comprising precipitated phosphorus and a cation exchanger comprising sorbed ammonium;
d) filtering the nutrient sludge, and optionally
e) drying the filtrate to provide a fertilizer comprising cation exchanger, ammonium and phosphorus
wherein the cation exchanger is selected from the group consisting of zeolite; peat; processed coconut shell, and combinations thereof, said combinations preferably being selected from zeolite and peat; zeolite and processed coconut shell; zeolite, peat and processed coconut shell, and peat and processed coconut shell.

2. The method according to claim 1, wherein steps a), b) and c) are performed in the same reaction vessel.

3. The method according to any one of the preceding claims, wherein step a) further initially comprises washing the cation exchanger with a magnesium solution, such as MgSO₄, in order to sorb magnesium to the cation exchanger.

4. The method according to any one of the preceding claims, further comprising the initial step of hydrolysing urea comprised in a urine solution to ammonium, thereby providing hydrolysed urine.

5. The method according to claim 1 or 2, wherein step c) comprises adjusting the pH of the mixture to a pH of above 10.

6. The method according to any one of the preceding claims, wherein the pH adjustment of step c) comprises adding a pH regulating agent, and/or adding a cation exchanger further comprising a pH regulating agent.

7. The method according to claim 6, wherein the pH regulating agent is selected from NaOH and MgO.

8. The method according to any one of the preceding claims, wherein step a) comprises adding peat comprising sorbed magnesium to the hydrolysed urine.

9. The method according to claim 8, wherein said peat comprising sorbed magnesium is mixed with a natural zeolite.

10. The method according to claim 9, wherein the ratio of peat comprising magnesium to natural zeolite is in the range of from 1 % to 50 % dry weight of peat comprising magnesium to 50 % to 99 % dry weight of natural zeolite, preferably wherein the ratio of peat comprising magnesium to natural zeolite is in the range of from 30 % to 50 % dry weight of peat comprising magnesium to 50 % to 70 % dry weight of natural zeolite.

11. The method according to any one of the preceding claims, wherein steps a) to c) are conducted at a temperature in the range of from 0 to 65 °C, such as in the range of from 5 to 50 °C, or for example in the range of from 10 to 35 °C.

12. Use of a cation exchanger comprising sorbed magnesium for recovering at least one nutrient from hydrolysed urine, wherein the nutrient(s) is/are recovered at a pH of above 9, wherein the cation exchanger is selected from the group consisting of zeolite; peat; processed coconut shell, and combinations thereof, said combinations preferably being selected from zeolite and peat; zeolite and processed coconut shell; zeolite, peat and processed coconut shell, and peat and processed coconut shell.

13. Use according to claim 12, wherein said cation exchanger is peat comprising sorbed magnesium.

14. Use according to claim 13, wherein said peat is mixed with a natural zeolite, preferably wherein the ratio of peat to natural zeolite is in the range of from 1 % to 50 % dry weight of peat to 50 % to 99 % dry weight of natural zeolite, more preferably wherein the ratio of peat to natural zeolite is in the range of from 30 % to 50 % dry weight of peat to 50 % to 70 % dry weight of natural zeolite.

## Patentansprüche

1. Verfahren zur Rückgewinnung von Nährstoffen aus hydrolysiertem Urin, die folgenden Schritte umfassend:
a) Zugabe eines Kationenaustauschers, der sorbiertes Magnesium enthält, zu dem hydrolysierten Urin;
b) Mischen des Kationenaustauschers mit dem hydrolysierten Urin, und
c) Einstellen des pH-Werts des Gemischs auf einen pH-Wert von über 9,
so dass zumindest ein Teil des sorbierten Magnesiums aus dem Kationenaustauscher in die Urinlösung des Gemischs freigesetzt wird, Phosphor in der Urinlösung ausgefällt wird und zumindest ein Teil des Ammoniums an den Kationenaustauscher sorbiert wird,
wodurch ein Nährstoffschlamm bereitgestellt wird, der ausgefällten Phosphor und einen Kationenaustauscher, der sorbiertes Ammonium umfasst;
d) Filtrieren des Nährstoffschlamms, und gegebenenfalls
e) Trocknen des Filtrats, um ein Düngemittel bereitzustellen, das Kationenaustauscher, Ammonium und Phosphor umfasst wobei der Kationenaustauscher ausgewählt ist aus der Gruppe bestehend aus Zeolith, Torf, verarbeiteter Kokosnussschale und Kombinationen davon, wobei die Kombinationen vorzugsweise
Zeolith und Torf, Zeolith und verarbeitete Kokosnussschale, Zeolith, Torf und verarbeitete Kokosnussschale und Torf und verarbeiteter Kokosnussschale sind.

2. Verfahren nach Anspruch 1, wobei die Schritte a), b) und c) in demselben Reaktionsgefäß durchgeführt werden.

3. Verfahren nach einem der vorangehenden Ansprüche, wobei Schritt a) ferner zunächst das Waschen des Kationenaustauschers mit einer Magnesiumlösung, wie MgSO₄, umfasst, um um Magnesium an den Kationenaustauscher zu sorbieren.

4. Verfahren nach einem der vorangehenden Ansprüche, das ferner den anfänglichen Schritt der Hydrolyse des in einer Urinlösung enthaltenen Harnstoffs zu Ammonium umfasst, wodurch hydrolysierten Urin bereitgestellt wird.

5. Verfahren nach Anspruch 1 oder 2, wobei Schritt c) das Einstellen des pH-Wertes der Gemisches auf einen pH-Wert von über 10 umfasst.

6. Verfahren nach einem der vorhergehenden Ansprüche, wobei die pH-Einstellung von Schritt c) die Zugabe eines pH-Regulierungsmittels und/oder die Zugabe eines Kationenaustauschers der ein pH-Regulierungsmittel enthält, umfasst.

7. Verfahren nach Anspruch 6, wobei das pH-Regulierungsmittel aus NaOH und MgO ausgewählt ist.

8. Verfahren nach einem der vorhergehenden Ansprüche, wobei Schritt a) die Zugabe von Torf, der sorbiertes Magnesium enthält, zu dem hydrolysierten Urin umfasst.

9. Verfahren nach Anspruch 8, wobei der Torf, der sorbiertes Magnesium enthält, mit einem natürlichen Zeolith gemischt wird.

10. Verfahren nach Anspruch 9, wobei das Verhältnis von magnesiumhaltigem Torf zu natürlichem Zeolith im Bereich von 1 % bis 50 % des Trockengewichts des magnesiumhaltigen Torfs zu 50 % bis 99 % des Trockengewichts des natürlichen Zeoliths liegt, wobei vorzugsweise das Verhältnis von magnesiumhaltigem Torf zu natürlichem Zeolith im Bereich von 30 % bis 50 % des Trockengewichts des magnesiumhaltigen Torfs zu 50 bis 70 % Trockengewicht des natürlichen Zeoliths liegt.

11. Verfahren nach einem der vorhergehenden Ansprüche, wobei die Schritte a) bis c) bei einer Temperatur im Bereich von 0 bis 65 °C, beispielsweise im Bereich von 5 bis 50 °C, oder beispielsweise im Bereich von 10 bis 35 °C durchgeführt werden.

12. Verwendung eines Kationenaustauschers, der sorbiertes Magnesium umfasst, zur Gewinnung von mindestens einem Nährstoff aus hydrolysiertem Urin, wobei der/die Nährstoff(e) bei einem pH-Wert von über 9 zurückgewonnen wird/werden,
wobei der Kationenaustauscher ausgewählt ist aus der Gruppe bestehend aus Zeolith, Torf, verarbeiteter Kokosnussschale und Kombinationen davon, wobei die Kombinationen vorzugsweise ausgewählt sind aus Zeolith und Torf; Zeolith und verarbeitete Kokosnussschale; Zeolith, Torf und verarbeitete Kokosnussschale und Torf und verarbeitete Kokosnussschale.

13. Verwendung nach Anspruch 12, wobei der Kationenaustauscher Torf ist, der sorbiertes Magnesium umfasst.

14. Verwendung nach Anspruch 13, wobei der Torf mit einem natürlichen Zeolith gemischt ist,
wobei das Verhältnis von Torf zu natürlichem Zeolith vorzugsweise im Bereich von 1 % bis 50 % des Trockengewichts des magnesiumhaltigen Torfs zu 50 % bis 99 % des Trockengewichts des natürlichen Zeoliths liegt, wobei mehr bevorzugt, das Verhältnis von magnesiumhaltigem Torf zu natürlichem Zeolith im Bereich von 30 % bis 50 % des Trockengewichts des magnesiumhaltigen Torfs zu 50 bis 70 % Trockengewicht des natürlichen Zeoliths liegt.

## Revendications

1. Procédé de récupération de nutriments à partir d'urine hydrolysée, comprenant les étapes consistant à :
a) ajouter un échangeur de cations comprenant du magnésium sorbé à l'urine hydrolysée ;
b) mélanger l'échangeur de cations avec l'urine hydrolysée, et
c) ajuster le pH du mélange à un pH supérieur à 9,
de manière à libérer au moins une partie du magnésium sorbé de l'échangeur de cations vers la solution d'urine du mélange, précipiter du phosphore dans la solution d'urine, et sorber au moins une partie de l'ammonium vers l'échangeur de cations,
fournissant ainsi une boue nutritive comprenant du phosphore précipité et un échangeur de cations comprenant de l'ammonium sorbé ;
d) filtrer la boue nutritive, et de manière facultative
e) sécher le filtrat pour fournir un engrais comprenant un échangeur de cations, de l'ammonium et du phosphore
dans lequel l'échangeur de cations est choisi dans le groupe constitué de zéolite; tourbe; coque de noix de coco transformée, et de leurs combinaisons, lesdites combinaisons étant de préférence choisies parmi zéolite et tourbe ; zéolite et coque de noix de coco transformée; zéolite, tourbe et coque de noix de coco transformée, et tourbe et coque de noix de coco transformée.

2. Procédé selon la revendication 1, dans lequel les étapes a), b) et c) sont effectuées dans le même récipient de réaction.

3. Procédé selon l'une quelconque des revendications précédentes, dans lequel l'étape a) comprend en outre initialement le lavage de l'échangeur de cations avec une solution de magnésium, telle que MgSQ4, afin de sorber le magnésium vers l'échangeur de cations.

4. Procédé selon l'une quelconque des revendications précédentes, comprenant en outre l'étape initiale d'hydrolyse de l'urée contenue dans une solution d'urine en ammonium, fournissant ainsi de l'urine hydrolysée.

5. Procédé selon la revendication 1 ou 2, dans lequel l'étape c) comprend l'ajustement du pH du mélange à un pH supérieur à 10.

6. Procédé selon l'une quelconque des revendications précédentes, dans lequel l'ajustement du pH de l'étape c) comprend l'ajout d'un agent régulateur de pH, et/ou l'ajout d'un échangeur de cations comprenant en outre un agent régulateur de pH.

7. Procédé selon la revendication 6, dans lequel l'agent régulateur de pH est choisi parmi NaOH et MgO.

8. Procédé selon l'une quelconque des revendications précédentes, dans lequel l'étape a) comprend l'ajout de tourbe comprenant du magnésium sorbé à l'urine hydrolysée.

9. Procédé selon la revendication 8, dans lequel ladite tourbe comprenant du magnésium sorbé est mélangée avec une zéolite naturelle.

10. Procédé selon la revendication 9, dans lequel le rapport entre la tourbe comprenant du magnésium et la zéolite naturelle est dans la plage de 1 % à 50 % en poids sec de tourbe comprenant du magnésium et 50 % à 99 % en poids sec de zéolite naturelle, de préférence dans lequel le rapport entre la tourbe comprenant du magnésium et la zéolite naturelle est dans la plage de 30 % à 50 % en poids sec de tourbe comprenant du magnésium et 50 % à 70 % en poids sec de zéolite naturelle.

11. Procédé selon l'une quelconque des revendications précédentes, dans lequel les étapes a) à c) sont conduites à une température dans la plage de 0 à 65 °C, telle que dans la plage de 5 à 50 °C, ou par exemple dans la plage de 10 à 35 °C.

12. Utilisation d'un échangeur de cations comprenant du magnésium sorbé pour récupérer au moins un nutriment à partir d'urine hydrolysée, dans laquelle le(s) nutriment(s) est/sont récupéré(s) à un pH supérieur à 9, l'échangeur de cations étant choisi dans le groupe constitué de zéolite ; tourbe ; coque de noix de coco transformée, et de leurs combinaisons, lesdites combinaisons étant de préférence choisies parmi zéolite et tourbe ; zéolite et coque de noix de coco transformée; zéolite, tourbe et coque de noix de coco transformée, et tourbe et coque de noix de coco transformée.

13. Utilisation selon la revendication 12, dans laquelle ledit échangeur de cations est de la tourbe comprenant du magnésium sorbé.

14. Utilisation selon la revendication 13, dans laquelle ladite tourbe est mélangée avec une zéolite naturelle, de préférence dans laquelle le rapport entre la tourbe et la zéolite naturelle est dans la plage de 1 % à 50 % en poids sec de tourbe et 50 % à 99 % en poids sec de zéolite, plus préférablement dans laquelle le rapport entre la tourbe et la zéolite naturelle est dans la plage de 30 % à 50 % en poids sec de tourbe et 50 % à 70 % en poids sec de zéolite naturelle.
